(19)

**Europäisches Patentamt**
**European Patent Office**
**Office européen des brevets**

(11)  **EP 4 290 276 B1**

(12)  **EUROPEAN PATENT SPECIFICATION**

(45) Date of publication and mention
 of the grant of the patent:
 **22.04.2026  Bulletin 2026/17**

(21) Application number: **21923813.6**

(22) Date of filing: **07.02.2021**

(51) International Patent Classification (IPC):
 **G01S 17/88** (2006.01)     **G06V 10/26** (2022.01)
 **G06V 20/56** (2022.01)

(52) Cooperative Patent Classification (CPC):
 **G06V 20/588; G06V 10/267**

(86) International application number:
 **PCT/CN2021/075812**

(87) International publication number:
 **WO 2022/165802 (11.08.2022 Gazette 2022/32)**

(54)  **ROAD BOUNDARY RECOGNITION METHOD AND APPARATUS**

 VERFAHREN UND VORRICHTUNG ZUR ERKENNUNG VON STRASSENRÄNDERN

 PROCÉDÉ ET APPAREIL DE RECONNAISSANCE DE BORDURE DE ROUTE

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**

(43) Date of publication of application:
 **13.12.2023  Bulletin 2023/50**

(73) Proprietor: **Shenzhen Yinwang Intelligent
 Technologies Co., Ltd.
 Shenzhen, Guangdong 518129 (CN)**

(72) Inventors:
 • **XU, Haoda
 Shenzhen, Guangdong 518129 (CN)**
 • **CHU, Hongyu
 Shenzhen, Guangdong 518129 (CN)**
 • **PENG, Xueming
 Shenzhen, Guangdong 518129 (CN)**
 • **WEI, Zhixuan
 Shenzhen, Guangdong 518129 (CN)**

(74) Representative: **Thun, Clemens
 Mitscherlich PartmbB
 Karlstraße 7
 80333 München (DE)**

(56) References cited:
 CN-A- 109 684 921     CN-A- 110 378 175
 CN-A- 110 579 222     CN-A- 110 673 107
 CN-A- 110 781 827     CN-A- 111 542 860
 CN-A- 111 985 322     CN-A- 112 014 856
 US-A1- 2020 109 953

**Description**

**TECHNICAL FIELD**

This application relates to the field of intelligent driving technologies, and specifically, relates to a road boundary recognition method and apparatus.

**BACKGROUND**

With social development, intelligent terminals such as an intelligent transportation device, a smart household device, and a robot are increasingly used in people's daily lives. A sensor plays an important role in an intelligent terminal. Various types of sensors mounted on intelligent terminals, for example, millimeter-wave radars, laser radars, cameras, and ultrasonic radars, sense an ambient environment during movement of the intelligent terminals, acquire data, identify and track moving objects, recognize static scenarios, for example, lane lines or signs, and perform path planning with navigators based on map data. The sensors can detect potential danger in advance, and assist in or even autonomously take a necessary evasive measure, thereby effectively improving safety and comfort of the intelligent terminals.

In intelligent driving technologies, phases such as sensing, decision-making, and control are included. A sensing module is the "eyes" of an intelligent vehicle. The sensing module receives information about the ambient environment and uses machine learning technologies to learn about and understand the environment in which the vehicle is located. A decision-making module uses information output by the sensing module to predict an action of a road user, to perform action decision-making for the vehicle. A control module calculates a lateral acceleration and a longitudinal acceleration of the vehicle based on an output of the decision-making module, and controls driving of the vehicle.

Road boundary recognition plays an important role in intelligent driving. Auxiliary information can be provided based on a recognized road boundary, to reduce the possibility of false object detection and improve accuracy of object detection. How to improve accuracy of road boundary recognition is an urgent problem to be resolved at present.

The document CN 110 781 827 A shows a road edge detection system and a road edge detection method based on laser radar and fan-shaped space segmentation.

**SUMMARY**

The present invention is defined by the independent claims. Further advantageous developments are shown by the dependent claims.

This application provides a road boundary recognition method and apparatus, to improve accuracy of road boundary recognition.

According to a first aspect, a road boundary recognition method is provided. The method includes: obtaining road recognition information, where the road recognition information includes a plurality of road boundary points; clustering the plurality of road boundary points to obtain a plurality of sets, where a first set in the plurality of sets includes at least one jump group, and each jump group includes a first road boundary point and a second road boundary point; sorting, in a first direction, a plurality of road boundary points in the first set, where for each jump group, the first road boundary point and the second road boundary point are adjacent to each other in the first direction, and a distance between the first road boundary point and the second road boundary point is greater than or equal to a preset distance; and segmenting the first set into a second set and a third set based on the at least one jump group, where the second set corresponds to a first road boundary, and the third set corresponds to a second road boundary.

In the first set in the clustering result of the plurality of road boundary points, when the distance between the two adjacent road boundary points in the first direction is greater than or equal to the preset distance, it may be considered that the two road boundary points do not correspond to a same road boundary, and the two road boundary points are in one jump group.

When the first set includes the at least one jump group, the first set is segmented to obtain the two sets corresponding to different road boundaries. In this way, accuracy of road boundary recognition can be improved.

As the first set corresponds to a plurality of road boundaries, if an expression form of a curve that is generally used to represent a road boundary is selected for curve fitting, a difference between a fitted curve and a road boundary may be large, and road boundary recognition is inaccurate.

For road boundary points in different road boundary sets, curve fitting may be performed separately. A set corresponding to a plurality of road boundaries is segmented, so that each set obtained after the segmentation corresponds to one road boundary. Curve fitting is performed on a road boundary point in each set obtained after the segmentation. As the set obtained after the segmentation corresponds to one road boundary, an expression of a curve that is generally used to represent a road boundary is selected during curve fitting, so that the road boundary can be accurately represented, thereby improving accuracy of road boundary recognition.

With reference to the first aspect, in some possible implementations, a quantity of the at least one jump group is more than one, and the segmenting the first set into a second set and a third set based on the at least one jump group includes: determining a segmentation line, where for each jump group, the first road boundary point and the second road boundary point are separately located on two sides of the segmentation line; and segmenting the first set into the second set and the third set based on the segmentation line, where a road boundary point in the second set and a road boundary point in the third set are road boundary points in the first set that are located on different sides of the segmentation line.

The segmentation line is determined based on the two road boundary points that are in each jump group in the first set and that are before and after location jumping, and the first set is segmented by using the segmentation line, so that each road boundary point in the set obtained after the segmentation better satisfies a correspondence between the set obtained after the segmentation and the road boundary point, thereby improving accuracy of road boundary recognition.

With reference to the first aspect, in some possible implementations, the determining a segmentation line includes: determining a plurality of segmentation points, where the plurality of segmentation points are in a one-to-one correspondence with the plurality of jump groups, and each segmentation point is located at a midpoint between the first road boundary point and the second road boundary point that are in the jump group corresponding to the segmentation point; and determining the segmentation line based on the plurality of segmentation points.

The segmentation line is determined based on the midpoint between the two road boundary jump points in each jump group, so that a relatively simple manner of determining the segmentation line is provided.

With reference to the first aspect, in some possible implementations, the method further includes: determining a coverage curve corresponding to each coverage set in a plurality of coverage sets, where each of the coverage sets includes a plurality of road boundary points in the second set, each of the coverage sets includes a third road boundary point that is in the second set and that is closest to a vehicle, and the road boundary points in each of the coverage sets are located on the coverage curve corresponding to the coverage set; and selecting, from a plurality of coverage curves, a coverage curve with the highest score to be the first road boundary, where the score is positively correlated with an absolute value of a repulsion distance and is positively correlated with a quantity of inliers, where the inlier is a road boundary point that is in the second set and to which a distance from the coverage curve is less than or equal to a preset threshold, the repulsion distance is used to indicate a sum of distances between the road boundary points in the second set and a fitted curve, and distances between the road boundary points located on different sides of the coverage curve and the fitted curve are different, where one is positive, and the other is negative.

When the road boundary is to be determined, the repulsion distance is further considered, so that the road boundary is located on one side of each road boundary point in the second set as far as possible. In addition, a road boundary point closest to the vehicle is selected as a point on the coverage curve, and the road boundary is determined in each coverage curve, so that the determined road boundary is an edge that is of a curb and that is close to the vehicle, and a recognized road boundary can better satisfy a vehicle driving requirement. In other words, accuracy of road boundary recognition can be improved.

With reference to the first aspect, in some possible implementations, the method further includes: fitting the road boundary points in the second set in a rectangular coordinate system, to obtain the first road boundary, where a horizontal coordinate axis of the rectangular coordinate system is parallel to a straight connection line, two endpoints of the straight connection line are two road boundary points that are in the second set and that are respectively closest to and farthest from the vehicle, and the road recognition information is acquired by the vehicle.

With reference to the first aspect, in some possible implementations, the first direction is a driving direction of the vehicle, and the road recognition information is acquired by the vehicle.

The first direction may be any direction. In some embodiments, the first direction may be the driving direction of the vehicle. The driving direction of the vehicle is a direction to which most attention is paid during vehicle driving. Using the driving direction of the vehicle as the first direction better satisfies a vehicle driving requirement.

In addition, the road recognition information may be acquired by the vehicle, and the vehicle may establish a coordinate system on the vehicle to represent the road recognition information. Generally, the driving direction of the vehicle is a coordinate axis of the coordinate system on the vehicle. Sorting the road boundary points in the first set in the first direction may be understood as sorting the road boundary points based on coordinate values of the road boundary points in the first set on the coordinate axis. The sorting manner requires less calculation and is easy to be implemented.

According to a second aspect, a road boundary recognition apparatus is provided. The apparatus includes: an obtaining module and a processing module. The obtaining module is configured to obtain road recognition information, where the road recognition information includes a plurality of road boundary points. The processing module is configured to cluster the plurality of road boundary points to obtain a plurality of sets, where a first set in the plurality of sets includes at least one jump group, and each jump group includes a first road boundary point and a second road boundary point. The processing module is further configured to sort, in a first direction, a plurality of road boundary points in the first set, where for each jump group, the first road boundary point and the second road boundary point are adjacent to each other in the first direction, and a distance between the first road boundary point and the second road boundary point is greater than or equal to a preset distance. The processing module is configured to segment the first set into a second set and a third set based on the at least one jump group, where the second set corresponds to a first road boundary, and the third set corresponds to a second road boundary.

With reference to the second aspect, in some possible implementations, a quantity of the at least one jump group is more than one. The processing module is configured to determine a segmentation line, where for each jump group, the first road boundary point and the second road boundary point are separately located on two sides of the segmentation line. The processing module is configured to segment the first set into the second set and the third set based on the segmentation line, where a road boundary point in the second set and a road boundary point in the third set are road boundary points in the first set that are located on different sides of the segmentation line.

With reference to the second aspect, in some possible implementations, the processing module is configured to determine a plurality of segmentation points, where the plurality of segmentation points are in a one-to-one correspondence with the plurality of jump groups, and each segmentation point is located at a midpoint between the first road boundary point and the second road boundary point that are in the jump group corresponding to the segmentation point; and the processing module is configured to determine the segmentation line based on the plurality of segmentation points.

With reference to the second aspect, in some possible implementations, the processing module is configured to determine a coverage curve corresponding to each coverage set in a plurality of coverage sets, where each of the coverage sets includes a plurality of road boundary points in the second set, each of the coverage sets includes a third road boundary point that is in the second set and that is closest to a vehicle, and the road boundary points in each of the coverage sets are located on the coverage curve corresponding to the coverage set; and the processing module is configured to select, from a plurality of coverage curves, a coverage curve with the highest score to be the first road boundary, where the score is positively correlated with an absolute value of a repulsion distance and is positively correlated with a quantity of inliers, where the inlier is a road boundary point that is in the second set and to which a distance from the coverage curve is less than or equal to a preset threshold, the repulsion distance is used to indicate a sum of distances between the road boundary points in the second set and a fitted curve, and distances between the road boundary points located on different sides of the coverage curve and the fitted curve are different, where one is positive, and the other is negative.

With reference to the second aspect, in some possible implementations, the processing module is configured to fit the road boundary points in the second set in a rectangular coordinate system, to obtain the first road boundary, where a horizontal coordinate axis of the rectangular coordinate system is parallel to a straight connection line, two endpoints of the straight connection line are two road boundary points that are in the second set and that are respectively closest to and farthest from the vehicle, and the road recognition information is acquired by the vehicle.

With reference to the second aspect, in some possible implementations, the first direction is a driving direction of the vehicle, and the road recognition information is acquired by the vehicle.

According to a third aspect, a road boundary recognition apparatus is provided. The apparatus includes at least one memory and at least one processor, where the at least one memory is configured to store a program, and the at least one processor is configured to run the program, to implement the method according to the first aspect.

According to a fourth aspect, a chip is provided. The chip includes at least one processor and an interface circuit, where the interface circuit is configured to provide program instructions or data for the at least one processor, and the at least one processor is configured to execute the program instructions to implement the method according to the first aspect.

According to a fifth aspect, a computer-readable storage medium is provided. The computer-readable storage medium stores program code to be executed by a device, and when the program code is executed by the device, the method according to the first aspect is implemented.

According to a sixth aspect, a computer program product is provided. The computer program product includes a computer program, and when the computer program product is executed by a computer, the computer performs the method according to the first aspect.

It should be understood that, in this application, the method according to the first aspect may specifically refer to the method according to any one of the first aspect or any of the implementations of the first aspect.

According to a seventh aspect, a terminal is provided. The terminal includes the road boundary recognition apparatus according to the second aspect or the third aspect.

Further, the terminal may be an intelligent transportation device (a vehicle or an uncrewed aerial vehicle), a smart household device, an intelligent manufacturing device, a robot, or the like. The intelligent transportation device may be, for example, an automated guided vehicle (automated guided vehicle, AGV) or an unmanned transportation vehicle.

## BRIEF DESCRIPTION OF DRAWINGS

FIG. 1 is a schematic diagram of a plurality of road scenarios;
FIG. 2 is a schematic flowchart of a road boundary recognition method according to an embodiment of this application;
FIG. 3 is a schematic diagram of a result of clustering road boundary points according to an embodiment of this application;

FIG. 4 is a schematic diagram of a jump group according to an embodiment of this application;

FIG. 5 is a schematic diagram of a segmentation point according to an embodiment of this application;

FIG. 6 is a schematic diagram of a result of segmenting a set according to an embodiment of this application;

FIG. 7 is a schematic diagram of a local coordinate system according to an embodiment of this application;

FIG. 8 is a schematic diagram of road boundary line division according to an embodiment of this application;

FIG. 9 is a schematic diagram of a structure of a road boundary recognition apparatus according to an embodiment of this application; and

FIG. 10 is a schematic diagram of a structure of another road boundary recognition apparatus according to an embodiment of this application.

## DESCRIPTION OF EMBODIMENTS

Technical solutions of this application are described below with reference to the accompanying drawings.

A road boundary recognition method and apparatus provided in embodiments of this application may be applied to an intelligent driving vehicle. The technical solutions in embodiments of this application are described below with reference to the accompanying drawings.

Accuracy of road boundary recognition affects safety of intelligent driving.

A road boundary point may be determined based on information acquired by a sensor, for example, a camera or a radar. Road boundary points are clustered, and curve fitting is performed on each type of road boundary points. A curve corresponding to each type is a road boundary corresponding to the type. When there is only one road in an area in which the sensor, for example, a camera or a radar, acquires the information, boundaries on two sides of the road may be determined.

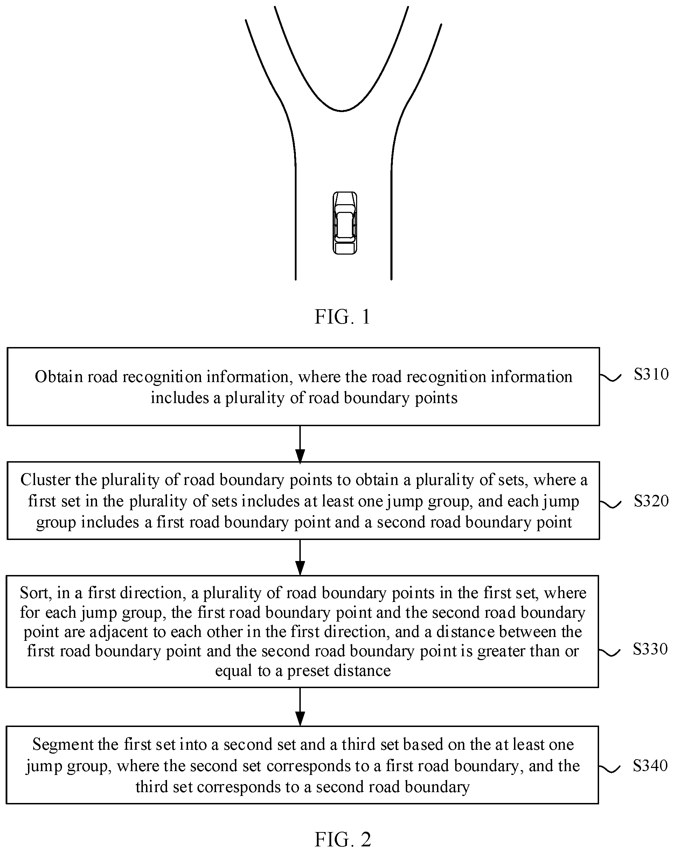

However, as shown in FIG. 1, when a vehicle is at a ramp junction, an intersection, or the like and there are a plurality of roads, because some clusters in a clustering result include road boundary points corresponding to the plurality of roads, locations of the road boundary points in the clusters may be relatively different from a shape of a road boundary point corresponding to one road. When curve fitting is performed on the road boundary points in the clusters, a fitting result is relatively different from an actual road boundary, and the road boundary cannot be accurately determined.

To resolve the problem, embodiments of this application provide a road recognition method and apparatus.

FIG. 2 is a schematic flowchart of a road boundary recognition method according to an embodiment of this application.

S310: Obtain road recognition information, where the road recognition information includes a plurality of road boundary points.

The road recognition information may be acquired by a sensor. Alternatively, the information may be obtained by processing information acquired by a sensor.

The sensor may be a radar, a camera, or the like. In other words, the road boundary point may be determined based on information acquired by a radar or an environment image acquired by a camera. The radar or the camera may be disposed on a vehicle, and the vehicle may be understood as a vehicle in question.

The radar may be a laser radar or a millimeter-wave radar. The radar detects an ambient environment in a plurality of directions to obtain a distance (that may also be referred to as a depth) between an object in each direction and the vehicle in question. The radar may output a depth map based on a depth corresponding to each direction of detection. The depth map may also be referred to as point cloud data.

The depth map may be used as the road recognition information. Alternatively, the depth map may be processed to obtain the road recognition information. A plurality of road boundary points in the depth map may be determined based on features such as a relatively low height of a road and continuity of a road boundary, to determine the road recognition information.

The environmental image acquired by the camera is processed by using a neural network or another algorithm, to determine the road recognition information.

The road recognition information may be a flat image, and a plane on which the flat image is located may be the horizontal plane. The flat image may be an occupied grid map (occupied grid map, OGM). Each grid in the occupied grid map is used to represent one location on the horizontal plane in the ambient environment of the vehicle. An occupied grid, that is, a location represented by the grid, is a road boundary point. On the contrary, an unoccupied grid, that is, a location represented by the grid, is not a road boundary point.

S320: Cluster the plurality of road boundary points to obtain a plurality of sets, where a first set in the plurality of sets includes at least one jump group, and each jump group includes a first road boundary point and a second road boundary point.

Based on the feature of continuity of a road boundary, generally, it may be considered that two road boundary points at a distance less than a specific distance threshold from each other belong to a same set. Therefore, the plurality of road boundary points may be clustered to obtain a plurality of sets.

The plurality of road boundary points may be clustered by using a clustering method, for example, a density-based spatial clustering of applications with noise (density-based spatial clustering of applications with noise, DBSCAN) or a K-means (K-Means) clustering algorithm.

The plurality of road boundary points may be clustered according to a principle of a minimum intra-cluster distance and a maximum inter-cluster distance. During clustering, the distance threshold may be preset, and a road boundary point at a distance less than or equal to the distance threshold from a road boundary point in a set is combined into the set by using a region growing algorithm, to update the set. A set is continuously updated based on a road boundary point outside the set, to determine a final set. Generally, road boundary points in each set are continuous.

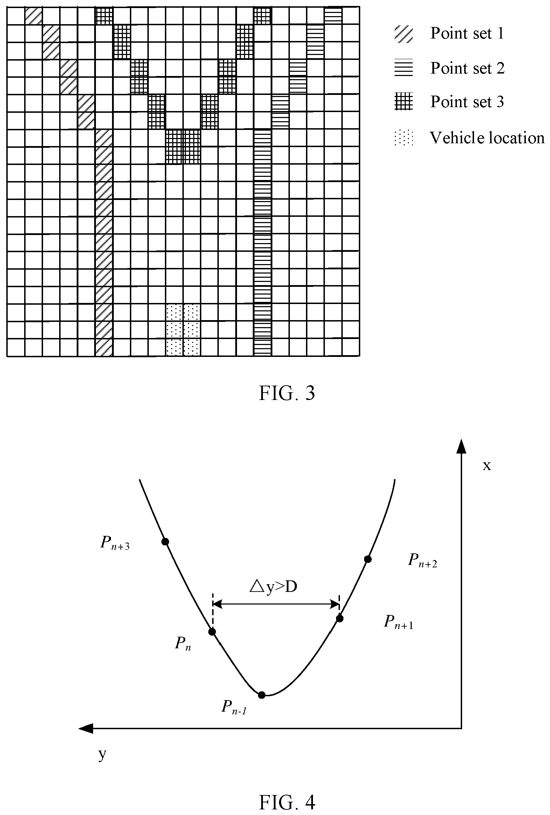

Each set in a clustering result may be understood as a cluster. As shown in FIG. 3, there are a plurality of sets, that is, a set 1, a set 2, and a set 3, obtained after clustering. In an environment with a ramp junction or an intersection, the clustering result may be under-segmented. As shown in FIG. 3, road boundary points that belong to different roads are clustered into a same set, that is, the set 3. As a result, boundaries of the different roads cannot be distinguished, that is, different roads cannot be recognized. In addition, for a set that includes road boundary points that belong to different roads, curvature of a curve is relatively large during curve fitting, not complying with a parameter constraint of a road. Consequently, a function expression of a road boundary is inaccurate.

S330: Sort, in a first direction, a plurality of road boundary points in the first set, where for each jump group, the first road boundary point and the second road boundary point are adjacent to each other in the first direction, and a distance between the first road boundary point and the second road boundary point is greater than or equal to a preset distance.

Sorting the plurality of road boundary points in the first set in the first direction may be understood as sorting the road boundary points in the first set based on a sequence of projection of the road boundary points in the first set in the first direction.

For each jump group, the first road boundary point and the second road boundary point are adjacent to each other in the first direction. To be specific, in a result of sorting the road boundary points in the first set in the first direction, the first road boundary point is adjacent to the second road boundary point.

The first direction may be any direction. In some embodiments, the first direction may be the driving direction of the vehicle. The driving direction of the vehicle is a direction to which most attention is paid during vehicle driving. Using the driving direction of the vehicle as the first direction better satisfies a vehicle driving requirement.

In addition, the road recognition information may be acquired by the vehicle, and the vehicle may establish a coordinate system on the vehicle to represent the road recognition information. Generally, the driving direction of the vehicle is a coordinate axis of the coordinate system on the vehicle. Sorting the road boundary points in the first set in the first direction may be understood as sorting the road boundary points based on coordinate values of the road boundary points in the first set on the coordinate axis. The sorting manner requires less calculation and is easy to be implemented.

Generally, a road boundary point may be a point on a curb. The curb is generally rather wide, that is, there may be a specific distance between two adjacent road boundary points in the first direction, and the distance generally does not exceed a width of the curb. When there is a relatively large distance between the two adjacent road boundary points in the first direction, it may be considered that the two road boundary points have jumped, that is, the two road boundary points correspond to different road boundaries.

A distance between the two adjacent road boundary points in the first direction may be limited, and whether a distance between each road boundary point and an adjacent road boundary point that are in the sorting result is greater than or equal to the preset distance is determined. When the distance between the two road boundary points is greater than or equal to the preset distance, it may be considered that the two road boundary points have jumped, and the two road boundary points may be understood as one jump group. The two road boundary points may be understood as two road boundary points before and after jumping.

By determining the jump group in the first set, it may be determined that there is more than one road boundary corresponding to the first set.

It should be understood that the first set may include a plurality of jump groups. Different jump groups may or may not include a same road boundary point.

A planar rectangular coordinate system as shown in FIG. 4 may be established, with a center of mass of a vehicle as an origin, an x-axis direction as a driving direction of the vehicle, and a y-axis direction being perpendicular to the driving direction of the vehicle. The first direction may be the x-axis direction. The driving direction of the vehicle is a direction to which most attention is paid during vehicle driving. The driving direction of the vehicle, that is, the x-axis direction, is used as the first direction, and a coordinate axis of a coordinate system on the vehicle coincides with the first direction, so that sorting of road boundary points in a set is easier, and computation for determining a jump group is simpler.

The road boundary points in the set are sorted based on x-coordinates in ascending order. x-coordinates of road boundary points $P_{n-1}$, $P_n$, $P_{n+1}$, $P_{n+2}$, and $P_{n+3}$ increase in sequence, and the road boundary points are adjacent to each other in the sorting result. A distance between $P_n$ and $P_{n+1}$ is greater than or equal to the preset distance D, and in this case, one jump group includes $P_n$ and $P_{n+1}$ that may be understood as a jump point. A distance between $P_{n+2}$ and $P_{n+3}$ is greater than or equal to the preset distance D, and in this case, another jump group includes $P_{n+2}$ and $P_{n+3}$.

In some embodiments, a difference value between y-coordinates of two adjacent road boundary points in the sorting result may be calculated. When a difference value $\triangle y$ between the y-coordinates of the two road boundary points is greater than or equal to the preset distance D, a distance between the two road boundary points is greater than or equal to the preset distance D.

As shown in FIG. 4, a difference value $\triangle y$ between y-coordinates of $P_n$ and $P_{n+1}$ is greater than the preset distance D.

In the clustering result as shown in FIG. 3, the set 3 includes a jump group, and the set 3 may be used as the first set for a subsequent step.

For a set that does not include a jump group, S340 may not be performed.

S340: Segment the first set into a second set and a third set based on the at least one jump group, where the second set corresponds to a first road boundary, and the third set corresponds to a second road boundary.

By performing S310 to S340, the road boundary points in the first set in the clustering result of the plurality of road boundary points are sorted in the first direction, to determine whether there is the jump group in the first set. The two road boundary points in the jump group are adjacent to each other in the sorting result, and a distance between the two road boundary points is greater than or equal to the preset distance. When there is the jump group, the first set is segmented based on the jump group to obtain the two sets corresponding to different road boundaries. In this way, accuracy of road boundary recognition is improved.

When it is determined that the first set includes the jump group, the first road boundary point and the second road boundary point in one jump group may be separately used as two clusters, and the first set is clustered, to obtain the second set and the third set. The first road boundary point and the second road boundary point belong to the second set and the third set respectively.

Alternatively, if there are a plurality of jump groups in the first set, a segmentation line may be determined based on a location of the first road boundary point and a location of the second road boundary point in each jump group, so that for each jump group, the first road boundary point and the second road boundary point are separately located on two sides of the segmentation line.

The first set may be segmented into the second set and the third set based on the segmentation line. A road boundary point in the second set and a road boundary point in the third set are road boundary points in the first set that are located on different sides of the segmentation line.

The segmentation line is determined based on the two road boundary points that are in each jump group in the first set and that are before and after location jumping, and the first set is segmented by using the segmentation line, so that each road boundary point in the set obtained after the segmentation better satisfies a correspondence between the set obtained after the segmentation and the road boundary point, thereby improving accuracy of road boundary recognition.

In some embodiments, a plurality of segmentation points may be determined. The plurality of segmentation points are in a one-to-one correspondence with the plurality of jump groups in the first set, and each segmentation point is located at a midpoint between the first road boundary point and the second road boundary point that are in the jump group corresponding to the segmentation point. The segmentation line may be determined based on the plurality of segmentation points.

In other words, in the first set, each jump group corresponds to one segmentation point. Each segmentation point may be a midpoint of a straight line segment whose endpoints are the first road boundary point and the second road boundary point in the jump group corresponding to the segmentation point.

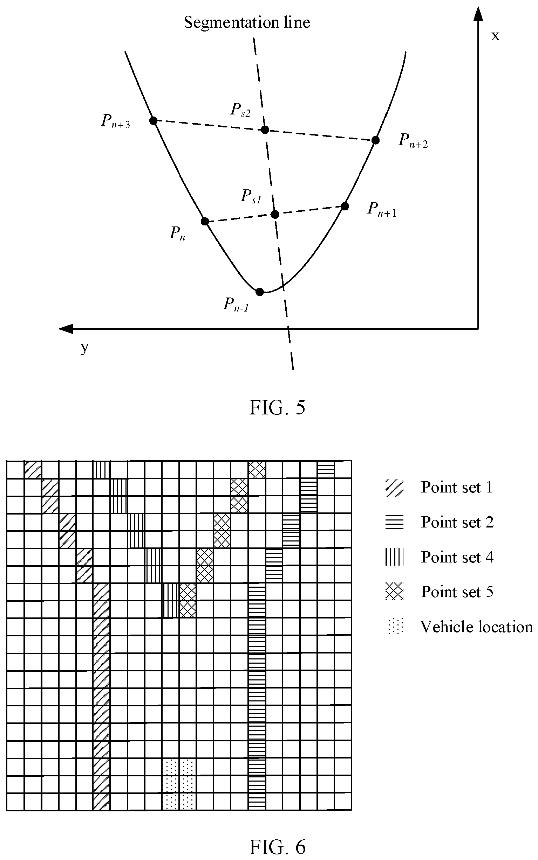

As shown in FIG. 5, a midpoint $P_{s1}$ of a straight line segment whose two endpoints are $P_n$ and $P_{n+1}$ is a segmentation point. A midpoint $P_{s2}$ of a straight line segment whose two endpoints are $P_{n+2}$ and $P_{n+3}$ is another segmentation point.

It should be understood that the segmentation point $P_{s1}$ may be expressed as $P_{s1} = \dfrac{\left(P_n + P_{n+1}\right)}{2}$, and the segmentation point $P_{s2}$ may be expressed as $P_{s2} = \dfrac{\left(P_{n+2} + P_{n+3}\right)}{2}$.

A midpoint of a line connecting two road boundary jump points in each jump group may be used as a segmentation point. The segmentation line may be determined based on a segmentation point corresponding to each of the plurality of jump groups. For example, curve fitting may be performed on a plurality of midpoints to obtain the segmentation line.

The segmentation line may be expressed as a function. The least squares method (least squares method, LSM) may be used to perform straight-line fitting to determine the segmentation line.

The segmentation line may be expressed as $y = k_1 x + b_1$, where $k_1$ and $b_1$ are parameters that are to be solved.

A sum $S(\beta)$ of squares of distances between the segmentation points and the segmentation line may be expressed as:

$$S\left(\beta\right) = \left\| Y - X\beta \right\|$$

m is a quantity of the segmentation points determined by performing S423, and an $i^{th}$ segmentation

point $P_{si}$ in the m segmentation points may be represented as $(x_i, y_i)$, and

$$X = \begin{bmatrix} x_1, 1 \\ x_2, 1 \\ \dots \\ x_m, 1 \end{bmatrix}, \quad Y = \begin{bmatrix} y_1 \\ y_2 \\ \dots \\ y_m \end{bmatrix}, \quad \beta = \begin{bmatrix} k_1 \\ b_1 \end{bmatrix}$$

Therefore, a minimum straight-line parameter $\hat{\beta}$ of $S(\beta)$ may be expressed as $\hat{\beta} = \arg\min(S(\beta)) = (X^T X)^{-1} X^T Y$. In this way, parameters $k_1$ and $b_1$ are solved and obtained.

The first set may be segmented into two sets, that is, the second set and the third set, by using the segmentation line. Road boundary points in the two sets obtained after the segmentation are road boundary points that are included in the set before the segmentation and that are located on two sides of the segmentation line.

The segmentation line is determined based on the midpoint between the two road boundary jump points in each jump group, so that a relatively simple manner of determining the segmentation line is provided.

The set 3 shown in FIG. 3 may be segmented into a set 4 and a set 5, as shown in FIG. 6.

After the first set is segmented into the second set and the third set by performing S340, road boundaries respectively corresponding to the second set and the third set may be determined. The road boundaries may be represented by a curve, and may also be referred to as a road boundary line. An example in which a road boundary corresponding to the second set is determined is used for description.

In some embodiments, a rectangular coordinate system may be established, and a function of first degree or a function of greater degree is used to express the road boundary.

In some scenarios, as unique mapping from an x-coordinate to a y-coordinate cannot be satisfied, an error may occur when the road boundary line is expressed by a cubic polynomial.

Two road boundary points that are in the second set and that are respectively closest to and farthest from the vehicle may be connected by using a straight connection line. A horizontal coordinate axis of the rectangular coordinate system is parallel to the straight connection line.

Then, the road boundary points in the second set may be fitted in the rectangular coordinate system, to obtain the first road boundary.

The horizontal coordinate axis of the rectangular coordinate system is parallel to the straight connection line connecting the two road boundary points that are in the second set and that are respectively closest to and farthest from the vehicle, so that mapping from a horizontal coordinate to a vertical coordinate in the rectangular coordinate system can be unique as far as possible, thereby improving accuracy of a road boundary line obtained by curve fitting.

In some scenarios, there is a coordinate system on the vehicle or another initial coordinate system that uses the driving direction of the vehicle as an x-axis. The rectangular coordinate system may alternatively be understood as a local coordinate system. An origin of the rectangular coordinate system may coincide with an origin of an initial rectangular coordinate system, to simplify representation of the rectangular coordinate system.

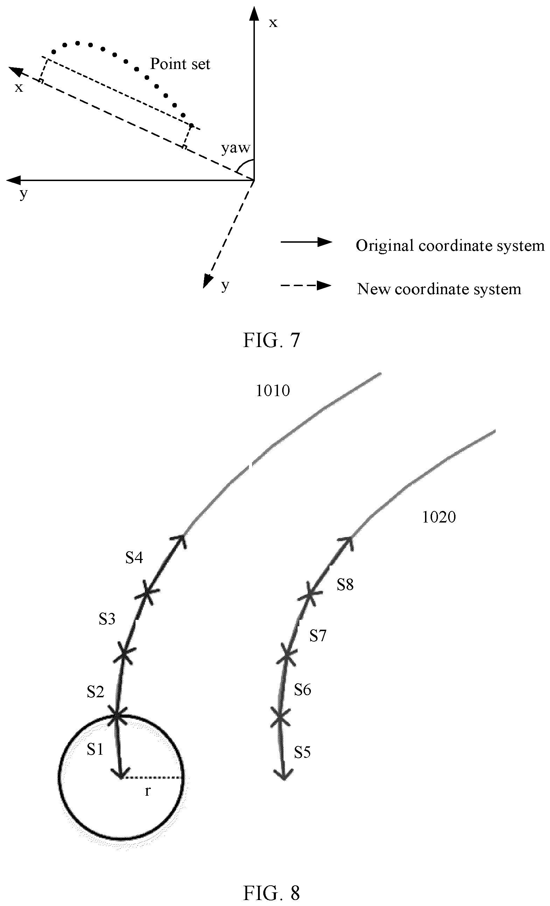

A direction of the rectangular coordinate system may change. The two road boundary points in the set that are respectively closest to and farthest from the vehicle are connected by using the straight connection line, and an included angle between the straight connection line and the x-axis is yaw. As shown in FIG. 7, a new local rectangular coordinate system is built by rotating the original rectangular coordinate system by the angle of yaw. An origin of the new local rectangular coordinate system coincides with the origin of the original rectangular coordinate system, and an included angle between an x-axis direction of the new local rectangular coordinate system and the x-axis of the original rectangular coordinate system is yaw. Curve fitting is performed in the new local rectangular coordinate system, and mapping of a curve obtained by fitting from an x-coordinate to a y-coordinate in the new local coordinate system is unique.

For each set, a rectangular coordinate system may be established with a direction parallel to a straight connection line connecting two road boundary points that are respectively closest to and farthest from the vehicle used as a horizontal coordinate axis, to fit road boundary points in the set and obtain a road boundary corresponding to the set.

The road boundaries in the second set may be fitted by using a random sample consensus (random sample consensus, RANSAC) algorithm or the least squares method.

A plurality of coverage sets may be determined in the second set by using the RANSAC algorithm, and each coverage set includes a plurality of road boundary points in the second set. For example, each coverage set may include a preset quantity of road boundary points in the second set. The preset quantity may be determined based on a functional form used to represent a road boundary. For example, a straight line $y = kx + b$ is used to represent the road boundary, and a function expression of the road boundary includes two parameters, that is, $k$ and $b$. In this case, the preset quantity of the road boundary points for determining the function expression of the road boundary is 2. If a cubic function curve $y = a_3 x^3 + a_2 x^2 + a_1 x + a_0$ is used to represent the road boundary, a function expression of the road boundary includes four parameters, that is, $a_3$, $a_2$, $a_1$, and $a_0$. In this case, the preset quantity of the road boundary points for determining the function expression of the road boundary is 4.

For each coverage set, a coverage curve corresponding to the coverage set may be determined. Each road boundary point in the coverage set is located on the coverage curve corresponding to the coverage set.

Then, a score of each coverage curve may be determined. The score of the coverage curve is positively correlated with a quantity of inliers corresponding to the coverage curve. The inlier corresponding to the coverage curve is a road boundary point that is in the second set and to which a distance from the coverage curve is less than or equal to a preset threshold.

It may be determined based on scores of a plurality of coverage curves that a coverage curve with a highest score in the coverage curves is the first road boundary corresponding to the second set.

An example in which a functional form of a road boundary line is a straight line is used for description.

It should be understood that a functional form of the road boundary line is a straight line, that is, straight-line fitting is implemented by using RANSAC. Straight-line fitting may also be referred to as linear fitting, and is a form of curve fitting.

Two road boundary points are randomly selected from the second set to be coverage points $p_1$ $(x_1, y_1)$ and $p_2$ $(x_2, y_2)$.

A straight-line equation of the coverage curve is $y = k_2 x + b_2$, where

$$\begin{cases} k_2 = \dfrac{y_1 - y_2}{x_1 - x_2} \\ b_2 = \dfrac{x_1 y_2 - y_1 x_2}{x_1 - x_2} \end{cases}$$

A quantity N of inliers, that is, road boundary points that are in the set and to which the distances from the coverage curve are less than the preset threshold is determined, and the quantity N of inliers is used as the score.

A distance between another road boundary point, other than the coverage points, in the set and the coverage curve is calculated, and the quantity N of inliers is documented, where N is a positive integer. The inlier is a road boundary point in the set for which the distance is less than the preset distance.

The distance between the road boundary point $p_i(x_i, y_i)$ and the coverage curve $y = k_2 x + b_2$ may be expressed as:

$$d = \frac{\left| k_2 x_i - y_i + b_2 \right|}{\sqrt{k_2^2 + 1}}$$

Random selection of a coverage point and calculation of a score of the selected coverage point are repeated, and it is determined that a coverage curve corresponding to a group of coverage points, in a plurality of groups of selected coverage points, with a highest score is the road boundary.

A curb of an urban road is at an edge or a middle zone of the road, and is higher than the road. A road boundary point in a set may be a point on the curb that has a specific width. In other words, the road boundary point is generally a point within a specific width range.

A road boundary corresponding to a set is determined by using the RANSAC algorithm, and is usually located in the middle of each road boundary point in the set. In other words, the road boundary is a central line of a curb. Using an edge of the curb that is on a side close to the vehicle, rather than using the central line of the curb, as the road boundary is more practical for vehicle driving.

The RANSAC algorithm may be improved.

A coverage curve corresponding to each coverage set in a plurality of coverage sets may be determined. Each of the coverage sets includes a plurality of road boundary points in the second set, each of the coverage sets includes a third road boundary point that is in the second set and that is closest to a vehicle, and the road boundary points in each of the coverage sets are located on the coverage curve corresponding to the coverage set.

A coverage curve with the highest score is selected from a plurality of coverage curves to be the first road boundary. The score is positively correlated with an absolute value of a repulsion distance and is positively correlated with a quantity of inliers. The inlier is a road boundary point that is in the second set and to which a distance from the coverage curve is less than or equal to a preset threshold, the repulsion distance is used to indicate a sum of distances between the road boundary points in the second set and a fitted curve, and distances between the road boundary points located on different sides of the coverage curve and the fitted curve are different, where one is positive, and the other is negative.

Specifically, when a coverage point in a coverage set is selected, the third road boundary point that is in the second set and that is closest to the vehicle is used as the coverage point, and another road boundary point is randomly selected from the second set as the coverage point. A quantity of coverage points in the coverage set is determined based on a functional form of a road boundary. For example, the quantity of coverage points selected for the road boundary whose functional form is a first-degree polynomial may be 2, or the quantity of coverage points selected for the road boundary whose functional form is a cubic polynomial may be 4.

The repulsion distance S corresponding to each coverage curve may be calculated. Each coverage point in a coverage set is located on a coverage curve. The repulsion distance S corresponding to the coverage curve is used to represent a sum of directed distances between the road boundary points in the second set and the coverage curve. The directed distances indicate directions of the road boundary points relative to the coverage curve by being positive or negative. To be specific, a directed distance of a road boundary point on one side of the coverage curve is positive, and a directed distance of a road boundary point on the other side of the coverage curve is negative.

The score corresponding to each coverage curve may be calculated. The score is positively correlated with the absolute value of the repulsion distance S, and is positively correlated with the quantity N of inliers.

In some embodiments, the score may be expressed as $s = q_1|S| + q_2N$. $q_1$ and $q_2$ are preset coefficients.

A coverage set is repeatedly determined to determine a plurality of coverage curves and calculate a score of each coverage curve, and it is determined that a group of coverage curves, in the plurality of coverage curves, with a highest score s is a road boundary.

When the road boundary is to be determined, the repulsion distance is further considered, so that the road boundary is located on one side of each road boundary point in the second set as far as possible. In addition, a road boundary point closest to the vehicle is selected as a point on the coverage curve, and the road boundary is determined in each coverage curve, so that the determined road boundary is an edge that is of a curb and that is close to the vehicle. By improving the RANSAC algorithm, the determined road boundary can better satisfy a vehicle driving requirement.

For another set, the improved RANSAC algorithm may also be used for processing, to determine a road boundary corresponding to each set.

The road boundary line is recognized by performing S310 to S340. Then, a road model may be further built based on the road boundary line.

Specifically, S351 to S355 may be performed.

S351: Segment each road boundary line into a plurality of sub-line segments.

One end of the road boundary line may be used as an initial start point of a sub-line segment, and search is performed based on a length of one unit. An end point of the sub-line segment may be obtained by using a point of intersection of the road boundary line and a unit circle whose center is the start point and whose radius (r) has a length of one unit. The sub-line segment may be a straight connection line connecting the start point and the end point. The end point may be used as a start point of a next sub-line segment to continue searching, so that the road boundary line may be segmented into the plurality of sub-line segments.

S352: Associate two sub-line segments that belong to different road boundary lines with each other, where if the two sub-line segments are parallel, the association is successful; otherwise, the association is not successful.

It should be understood that "parallel" may mean being approximately parallel.

For each sub-line segment, a sub-line segment parallel to the sub-line segment may be found out by using a normal of the sub-line segment. The normal of the sub-line segment is perpendicular to the sub-line segment.

As shown in FIG. 8, a road boundary line 1010 is segmented, and a sub-line segment S1 to a sub-line segment S4 are obtained. A road boundary line 1020 is segmented, and a sub-line segment S5 to a sub-line segment S8 are obtained. If a normal of the sub-line segment S1 is parallel to a normal of the sub-line segment S5, it is considered that the sub-line segment S1 is parallel to the sub-line segment S5, and S1 is successfully associated with S5; otherwise, S1 is not successfully associated with S5. If the association is successful, association results of the other sub-line segments S2, S3, S4, and the like are determined sequentially.

S353: Determine, based on a proportion of successfully associated sub-line segments of two road boundary lines, whether the two road boundary lines are parallel.

For the two road boundary lines, a quantity of sub-line segments of each road boundary line and a quantity of successfully associated sub-line segments of the road boundary line are counted. If a proportion of successfully associated sub-line segments of at least one road boundary line reaches a preset proportion, it is determined that the two road boundary lines are parallel. The preset proportion may be, for example, 80%.

It should be understood that two parallel road boundary lines are two boundaries of one road.

In the sets shown in FIG. 6, a road boundary line corresponding to the set 4 is parallel to a road boundary line corresponding to the set 1, and a road boundary line corresponding to the set 5 is parallel to a road boundary line corresponding to the set 2.

In some cases, for two road boundary lines that are determined as parallel, a proportion of successfully associated sub-line segments of one of the road boundary lines reaches the preset proportion, while a proportion of successfully associated sub-line segments of the other road boundary line is lower.

As shown in FIG. 6, for the road boundary line corresponding to the set 4, probably more than 80% of sub-line segments are parallel to sub-line segments of the road boundary line corresponding to the set 1. However, for the road boundary line corresponding to the set 1, probably only a very low proportion of sub-line segments are parallel to the sub-line segments of the road boundary line corresponding to the set 4.

For two road boundary lines that are determined as parallel, if a proportion of successfully associated sub-line segments of one of the road boundary lines reaches the preset proportion, while a proportion of successfully associated sub-line segments of the other road boundary line is lower and does not reach the preset proportion, a sub-line segment that is not successfully associated of the road boundary line with the lower proportion of successfully associated sub-line segments may be segmented and used as a new road boundary line to be associated with a sub-line segment of another road boundary line.

Another sub-line segment, other than a part parallel to the road boundary line corresponding to the set 4, of the road boundary line corresponding to the set 1 may be used as a new road boundary line to be associated with the sub-line segment of the another road boundary line. Similarly, another sub-line segment, other than a part parallel to the road boundary line corresponding to the set 5, of the road boundary line corresponding to the set 2 may be used as a new road boundary line to be associated with the sub-line segment of the another road boundary line.

If it is determined that the new road boundary line determined from the road boundary line corresponding to the set 1 is parallel to the new road boundary line determined from the road boundary line corresponding to the set 2, it may be determined that the point set 1, the point set 2, the point set 4, and the point set 5 shown in FIG. 6 correspond to three groups of parallel road boundary lines. That is, three roads are determined.

It should be understood that after the segmentation, there are two road boundary lines corresponding to the set 1. One of the road boundary lines includes the sub-line segments parallel to the road boundary line corresponding to the set 4, and the other road boundary line includes a sub-line segment parallel to the road boundary line corresponding to the set 2. There are also two road boundary lines corresponding to the set 2. One of the road boundary lines includes a sub-line segment parallel to the road boundary line corresponding to the set 5, and the other road boundary line includes a sub-line segment parallel to the road boundary line corresponding to the set 1.

S354: For two parallel road boundary lines, use an average distance between parallel sub-line segments of the two road boundary lines as a road width w.

S355: Build a road model.

A quantity of parallel road boundary line groups is a quantity of roads. The road model may be built based on a function expression parameter of any road boundary line in each group of parallel road boundary lines, a width of each road, and a start location and an end location of the road.

For example, for a scenario of n roads, road boundary points in a set are fitted by using a cubic polynomial, and one road boundary line of an $i^{th}$ road is expressed as $y = a_{0i}x^3 + a_{1i}x^2 + a_{2i}x + a_{3i}$, where i is less than or equal to n, and i is a positive integer. A local coordinate system of the function expression of the boundary line of the $i^{th}$ road is obtained by rotating the coordinate system of the vehicle that uses the driving direction of the vehicle as the x-axis by an angle of $yaw_i$. An x-coordinate of a start location of the road boundary line in the local coordinate system is $x_{si}$, and an x-coordinate of an end location is $x_{ei}$. The other boundary of the $i^{th}$ road may be determined based on the road boundary line $y = a_{0i}x^3 + a_{1i}x^2 + a_{2i}x + a_{3i}$ of the $i^{th}$ road and a road

width $w_i$. A road model in the scenario of the n roads may be expressed as:

$$\begin{bmatrix} a_{01} & a_{11} & a_{21} & a_{31} & x_{s1} & x_{e1} & w_1 & yaw_1 \\ & & & \vdots & & & & \\ a_{0n} & a_{1n} & a_{2n} & a_{3n} & x_{sn} & x_{en} & w_n & yaw_n \end{bmatrix}$$

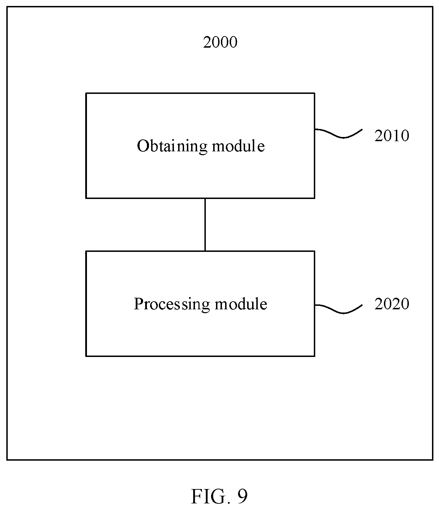

The method embodiments of embodiments of this application are described above with reference to FIG. 1 to FIG. 8. Apparatus embodiments of embodiments of this application are described below with reference to FIG. 9 to FIG. 10. It should be understood that the descriptions of the method embodiments correspond to descriptions of the apparatus embodiments. Therefore, for parts that are not described in detail, refer to the descriptions in the foregoing method embodiments.

The road boundary recognition method provided in embodiments of this application improves an advanced driver assistance system (advanced driving assistance system, ADAS) capability of a terminal in autonomous driving or assisted driving, and may be applied to the Internet of Vehicles, for example, vehicle-to-everything (vehicle to everything, V2X), long-term evolution-vehicle (long-term evolution-vehicle, LTE-V), and vehicle-to-vehicle (vehicle-to-vehicle, V2V).

FIG. 9 is a schematic diagram of a structure of a road boundary recognition apparatus according to an embodiment of this application.

A road boundary recognition apparatus 2000 includes an obtaining module 2010 and a processing module 2020.

The obtaining module 2010 is configured to obtain road recognition information. The road recognition information includes a plurality of road boundary points.

The processing module 2020 is configured to cluster the plurality of road boundary points to obtain a plurality of sets. A first set in the plurality of sets includes at least one jump group, and each jump group includes a first road boundary point and a second road boundary point.

The processing module 2020 is further configured to sort, in a first direction, a plurality of road boundary points in the first set. For each jump group, the first road boundary point and the second road boundary point are adjacent to each other in the first direction, and a distance between the first road boundary point and the second road boundary point is greater than or equal to a preset distance.

The processing module 2020 is further configured to segment the first set into a second set and a third set based on the at least one jump group. The second set corresponds to a first road boundary, and the third set corresponds to a second road boundary.

Optionally, a quantity of the at least one jump group is more than one.

The processing module 2020 is further configured to determine a segmentation line. For each jump group, the first road boundary point and the second road boundary point are separately located on two sides of the segmentation line.

The processing module 2020 is further configured to segment the first set into the second set and the third set based on the segmentation line. A road boundary point in the second set and a road boundary point in the third set are road boundary points in the first set that are located on different sides of the segmentation line.

Optionally, the processing module 2020 is further configured to determine a plurality of segmentation points. The plurality of segmentation points are in a one-to-one correspondence with the plurality of jump groups, and each segmentation point is located at a midpoint between the first road boundary point and the second road boundary point that are in the jump group corresponding to the segmentation point.

The processing module 2020 is further configured to determine the segmentation line based on the plurality of segmentation points.

Optionally, the processing module 2020 is further configured to determine a coverage curve corresponding to each coverage set in a plurality of coverage sets. Each of the coverage sets includes a plurality of road boundary points in the second set, each of the coverage sets includes a third road boundary point that is in the second set and that is closest to a vehicle, and the road boundary points in each of the coverage sets are located on the coverage curve corresponding to the coverage set.

The processing module 2020 is further configured to select, from a plurality of coverage curves, a coverage curve with the highest score to be the first road boundary. The score is positively correlated with an absolute value of a repulsion distance and is positively correlated with a quantity of inliers. The inlier is a road boundary point that is in the second set and to which a distance from the coverage curve is less than or equal to a preset threshold, the repulsion distance is used to indicate a sum of distances between the road boundary points in the second set and a fitted curve, and distances between the road boundary points located on different sides of the coverage curve and the fitted curve are different, where one is positive, and the other is negative.

Optionally, the processing module 2020 is further configured to fit the road boundary points in the second set in a rectangular coordinate system, to obtain the first road boundary. A horizontal coordinate axis of the rectangular coordinate system is parallel to a straight connection line, two endpoints of the straight connection line are two road boundary points that are in the second set and that are respectively closest to and farthest from the vehicle, and the road recognition information is acquired by the vehicle.

Optionally, the first direction is a driving direction of the vehicle, and the road recognition information is acquired by the vehicle.

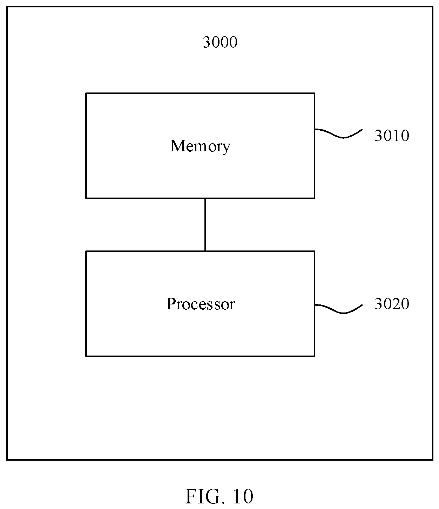

FIG. 10 is a schematic diagram of a structure of a road boundary recognition apparatus according to an embodiment of this application.

A road boundary recognition apparatus 3000 includes at least one memory 3010 and at least one processor 3020. The at least one memory is configured to store a program, and the at least one processor is configured to run the program, to implement the road boundary recognition method described above.

Specifically, the at least one processor 3020 is configured to implement the road boundary recognition method shown in FIG. 2.

The road boundary recognition apparatus 2000 or the road boundary recognition apparatus 3000 may be vehicles with a road boundary recognition function, or may be other components with a road boundary recognition function. The road boundary recognition apparatus includes, but is not limited to, another sensor, for example, a vehicle-mounted terminal, a vehicle controller, a vehicle-mounted module, a vehicle-mounted module set, a vehicle-mounted component, a vehicle-mounted chip, a vehicle-mounted unit, a vehicle-mounted radar, or a vehicle-mounted camera. A vehicle may implement the method provided in this application by using the vehicle-mounted terminal, the vehicle-mounted controller, the vehicle-mounted module, the vehicle-mounted module set, the vehicle-mounted component, the vehicle-mounted chip, the vehicle-mounted unit, the vehicle-mounted radar, or the camera.

The road boundary recognition apparatus may alternatively be another intelligent terminal, other than a vehicle, with a road boundary recognition function, or may be disposed in another intelligent terminal, other than a vehicle, with a road boundary recognition function, or may be disposed in a component of the intelligent terminal. The intelligent terminal may be another terminal device, for example, an intelligent transportation device, a smart household device, or a robot. The road boundary recognition apparatus includes, but is not limited to, an intelligent terminal or another sensor, for example, a controller, a chip, a radar, or a camera in the intelligent terminal, and another component.

The road boundary recognition apparatus 2000 or the road boundary recognition apparatus 3000 may be a general-purpose device or a dedicated device. In a specific implementation, the apparatus may further be a desktop computer, a portable computer, a network server, a personal digital assistant (personal digital assistant, PDA), a mobile phone, a tablet computer, a wireless terminal device, an embedded device, or another device with a processing function. A type of the apparatus is not limited in embodiments of this application.

The road boundary recognition apparatus 2000 or the road boundary recognition apparatus 3000 may be a chip or processor with a processing function. The road boundary recognition apparatus may include a plurality of processors. Each of the processors may be a single-core processor (single-CPU), or may be a multi-core processor (multi-CPU). The chip or processor with the processing function may be disposed in a sensor, or may not be disposed in a sensor but disposed at a receiving end for an output signal of the sensor.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through examples but not limitative descriptions, random access memories (random access memory, RAM) in many forms are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

The descriptions of procedures corresponding to the foregoing accompanying drawings have respective focuses. For a part of a procedure that is not described in detail, refer to related descriptions of another procedure.

Further, the terminal may be an intelligent transportation device (a vehicle or an uncrewed aerial vehicle), a smart household device, an intelligent manufacturing device, a robot, or the like. The intelligent transportation device may be, for example, an automated guided vehicle (automated guided vehicle, AGV) or an unmanned transportation vehicle.

It should be understood that sequence numbers of the processes in the foregoing embodiments of this application do not mean a sequence for performing. The sequence for performing the processes should be determined based on functions and internal logic of the processes, and should not constitute any limitation on implementation processes of embodiments of this application.

Terms such as "component", "module", and "system" used in this specification are used to represent computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and the component may be included in one computer and/or distributed over two or more computers. In addition, the component may be executed from various computer-readable media that store various data structures. For example, the component may perform communication through a local and/or remote process based on, for example, a signal that has one or more data packets (for example, data from two components interacting with another component in a local system, a distributed system, and/or across a network, for example, the Internet interacting with another system by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions.

It can be clearly understood by a person skilled in the art that, for convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling, direct coupling, or communication connection may be implemented through some interfaces. The indirect coupling or the communication connection between the apparatuses or units may be implemented in electronic, mechanical, or another form.

The units described as separate parts may or may not be physically separate, and parts displayed as units may or may not be physical units, and may have one location, or may be distributed over a plurality of network units. All or some of the units may be selected based on an actual requirement, to achieve the objectives of the solutions of embodiments.

In addition, the functional units in embodiments of this application may be integrated into one processing unit, each of the units may exist alone physically, or two or more units are integrated into one unit.

## Claims

1. A computer implemented road boundary recognition method, for identifying a road boundary when a vehicle is at a ramp junction, and intersection, or the like, comprising:

    obtaining (S310) road recognition information, wherein the road recognition information comprises a plurality of road boundary points, wherein a road boundary point is a point on a curb;
    clustering (S320) the plurality of road boundary points to obtain a plurality of sets, wherein a first set in the plurality of sets comprises at least one jump group, and each jump group comprises a first road boundary point and a second road boundary point, wherein the first road boundary point and the second road boundary point belong to different road boundaries;
    sorting (S330), in a first direction, a plurality of road boundary points in the first set, wherein for each jump group, the first road boundary point and the second road boundary point are adjacent to each other in the first direction, and a distance between the first road boundary point and the second road boundary point is greater than or equal to a preset distance; and
    segmenting (S340) the first set into a second set and a third set based on the at least one jump group, wherein the second set corresponds to a first road boundary, and the third set corresponds to a second road boundary.

2. The method according to claim 1, wherein a quantity of the at least one jump group is more than one, and the segmenting the first set into a second set and a third set based on the at least one jump group comprises:

    determining a segmentation line, wherein for each jump group, the first road boundary point and the second road boundary point are separately located on two sides of the segmentation line; and
    segmenting the first set into the second set and the third set based on the segmentation line, wherein a road boundary point in the second set and a road boundary point in the third set are road boundary points in the first set that are located on different sides of the segmentation line

3. The method according to claim 2, wherein the determining a segmentation line comprises:

    determining a plurality of segmentation points, wherein the plurality of segmentation points are in a one-to-one correspondence with the plurality of jump groups, and each segmentation point is located at a midpoint between the first road boundary point and the second road boundary point that are in the jump group corresponding to the segmentation point; and determining the segmentation line based on the plurality of segmentation points

4. The method according to any one of claims 1 to 3, wherein the method further comprises:

    determining a coverage curve corresponding to each coverage set in a plurality of coverage sets, wherein each of the coverage sets comprises a plurality of road boundary points in the second set, each of the coverage sets comprises a third road boundary point that is in the second set and that is closest to a vehicle, and the road boundary points in each of the coverage sets are located on the coverage curve corresponding to the coverage set; and
    selecting, from a plurality of coverage curves, a coverage curve with the highest score to be the first road boundary, wherein the score is positively correlated with an absolute value of a repulsion distance and is positively correlated with a quantity of inliers, wherein the inlier is a road boundary point that is in the second set and to which a distance from the coverage curve is less than or equal to a preset threshold, the repulsion distance is used to indicate a sum of distances between the road boundary points in the second set and a fitted curve, and distances between the road boundary points located on different sides of the coverage curve and the fitted curve are different, wherein one is positive, and the other is negative.

5. The method according to any one of claims 1 to 4, wherein the method further comprises:
fitting the road boundary points in the second set in a rectangular coordinate system, to obtain the first road boundary, wherein a horizontal coordinate axis of the rectangular coordinate system is parallel to a straight connection line, two endpoints of the straight connection line are two road boundary points that are in the second set and that are respectively closest to and farthest from the vehicle, and the road recognition information is acquired by the vehicle.

6. The method according to any one of claims 1 to 5, wherein the first direction is a driving direction of the vehicle, and the road recognition information is acquired by the vehicle.

7. A road boundary recognition apparatus (2000), for identifying a road boundary when a vehicle is at a ramp junction, and intersection, or the like, comprising an obtaining module (2010) and a processing module (2020), wherein

the obtaining module (2010) is configured to obtain road recognition information, wherein the road recognition information comprises a plurality of road boundary points, wherein a road boundary point is a point on a curb;
the processing module (2020) is configured to cluster the plurality of road boundary points to obtain a plurality of sets, wherein a first set in the plurality of sets comprises at least one jump group, and each jump group comprises a first road boundary point and a second road boundary point, wherein the first road boundary point and the second road boundary point belong to different road boundaries;
the processing module (2020) is further configured to sort, in a first direction, a plurality of road boundary points in the first set, wherein for each jump group, the first road boundary point and the second road boundary point are adjacent to each other in the first direction, and a distance between the first road boundary point and the second road boundary point is greater than or equal to a preset distance; and
the processing module (2020) is configured to segment the first set into a second set and a third set based on the at least one jump group, wherein the second set corresponds to a first road boundary, and the third set corresponds to a second road boundary.

8. The apparatus (2000) according to claim 7, wherein a quantity of the at least one jump group is more than one, and

the processing module (2020) is configured to determine a segmentation line, wherein for each jump group, the first road boundary point and the second road boundary point are separately located on two sides of the segmentation line; and
the processing module (2020) is configured to segment the first set into the second set and the third set based on the segmentation line, wherein a road boundary point in the second set and a road boundary point in the third set are road boundary points in the first set that are located on different sides of the segmentation line.

9. The apparatus (2000) according to claim 8, wherein

the processing module (2020) is configured to determine a plurality of segmentation points, wherein the plurality of segmentation points are in a one-to-one correspondence with the plurality of jump groups, and each segmentation point is located at a midpoint between the first road boundary point and the second road boundary point that are in the jump group corresponding to the segmentation point; and
the processing module (2020) is configured to determine the segmentation line based on the plurality of segmentation points

10. The apparatus (2000) according to any one of claims 7 to 9, wherein

the processing module (2020) is configured to determine a coverage curve corresponding to each coverage set in a plurality of coverage sets, wherein each of the coverage sets comprises a plurality of road boundary points in the second set, each of the coverage sets comprises a third road boundary point that is in the second set and that is closest to a vehicle, and the road boundary points in each of the coverage sets are located on the coverage curve corresponding to the coverage set; and
the processing module (2020) is configured to select, from a plurality of coverage curves, a coverage curve with the highest score to be the first road boundary, wherein the score is positively correlated with an absolute value of a repulsion distance and is positively correlated with a quantity of inliers, wherein the inlier is a road boundary point that is in the second set and to which a distance from the coverage curve is less than or equal to a preset threshold, the repulsion distance is used to indicate a sum of distances between the road boundary points in the second set and a fitted curve, and distances between the road boundary points located on different sides of the coverage curve and the fitted curve are different, wherein one is positive, and the other is negative.

11. The apparatus (2000) according to any one of claims 7 to 10, wherein
the processing module (2020) is configured to fit the road boundary points in the second set in a rectangular coordinate system, to obtain the first road boundary, wherein a horizontal coordinate axis of the rectangular coordinate system is parallel to a straight connection line, two endpoints of the straight connection line are two road boundary points that are in the second set and that are respectively closest to and farthest from the vehicle, and the road recognition information is acquired by the vehicle.

12. The apparatus (2000) according to any one of claims 7 to 11, wherein the first direction is a driving direction of the vehicle, and the road recognition information is acquired by the vehicle.

13. A road boundary recognition apparatus (3000), comprising at least one memory (3010) and at least one processor (3020), wherein the at least one memory is configured to store a program, and the at least one processor is configured to run the program, to implement the method according to any one of claims 1 to 6.

14. A chip, comprising at least one processor and an interface circuit, wherein the interface circuit is configured to provide program instructions or data for the at least one processor, and the at least one processor is configured to execute the program instructions to implement the method according to any one of claims 1 to 6.

15. A computer-readable storage medium, wherein the computer-readable medium stores program code to be executed by a device, and when the program code is executed by the device, the method according to any one of claims 1 to 6 is implemented.

**Patentansprüche**

1. Computerimplementiertes Verfahren zur Erkennung von Straßenrändern, um einen Straßenrand zu identifizieren, wenn sich ein Fahrzeug an einer Anschlussstelle, einer Kreuzung oder dergleichen befindet, umfassend:

Erhalten (S310) von Straßenerkennungsinformationen, wobei die Straßenerkennungsinformationen eine Vielzahl von Straßenrandpunkten umfassen, wobei ein Straßenrandpunkt ein Punkt an einem Bordstein ist;
Clustern (S320) der Vielzahl von Straßenrandpunkten, um eine Vielzahl von Sätzen zu erhalten, wobei ein erster Satz in der Vielzahl von Sätzen mindestens eine Sprunggruppe umfasst und jede Sprunggruppe einen ersten Straßenrandpunkt und einen zweiten Straßenrandpunkt umfasst, wobei der erste Straßenrandpunkt und der zweite Straßenrandpunkt zu verschiedenen Straßenrändern gehören;
Sortieren (S330), in einer ersten Richtung, einer Vielzahl von Straßenrandpunkten in dem ersten Satz, wobei für jede Sprunggruppe der erste Straßenrandpunkt und der zweite Straßenrandpunkt in der ersten Richtung aneinander angrenzen und ein Abstand zwischen dem ersten Straßenrandpunkt und dem zweiten Straßenrandpunkt größer als oder gleich einem voreingestellten Abstand ist; und
Segmentieren (S340) des ersten Satzes in einen zweiten Satz und einen dritten Satz basierend auf der mindestens einen Sprunggruppe, wobei der zweite Satz einem ersten Straßenrand entspricht und der dritte Satz einem zweiten Straßenrand entspricht.

2. Verfahren nach Anspruch 1, wobei eine Menge der mindestens einen Sprunggruppe mehr als eins beträgt und
das Segmentieren des ersten Satzes in einen zweiten Satz und einen dritten Satz basierend auf der mindestens einen Sprunggruppe Folgendes umfasst:

Bestimmen einer Segmentierungslinie, wobei sich für jede Sprunggruppe der erste Straßenrandpunkt und der zweite Straßenrandpunkt getrennt auf zwei Seiten der Segmentierungslinie befinden; und
Segmentieren des ersten Satzes in den zweiten Satz und den dritten Satz basierend auf der Segmentierungslinie, wobei ein Straßenrandpunkt in dem zweiten Satz und ein Straßenrandpunkt in dem dritten Satz Straßenrandpunkte in dem ersten Satz sind, die sich auf verschiedenen Seiten der Segmentierungslinie befinden.

3. Verfahren nach Anspruch 2, wobei das Bestimmen einer Segmentierungslinie Folgendes umfasst:

Bestimmen einer Vielzahl von Segmentierungspunkten, wobei die Vielzahl von Segmentierungspunkten in einer Eins-zu-Eins-Entsprechung mit der Vielzahl von Sprunggruppen steht und sich jeder Segmentierungspunkt an einem Mittelpunkt zwischen dem ersten Straßenrandpunkt und dem zweiten Straßenrandpunkt befindet, die sich in der dem Segmentierungspunkt entsprechenden Sprunggruppe befinden; und
Bestimmen der Segmentierungslinie basierend auf der Vielzahl von Segmentierungspunkten.

4. Verfahren nach einem der Ansprüche 1 bis 3, wobei das Verfahren ferner Folgendes umfasst:

Bestimmen einer Abdeckungskurve, die jedem Abdeckungssatz in einer Vielzahl von Abdeckungssätzen entspricht, wobei jeder der Abdeckungssätze eine Vielzahl von Straßenrandpunkten in dem zweiten Satz umfasst, jeder der Abdeckungssätze einen dritten Straßenrandpunkt umfasst, der sich in dem zweiten Satz befindet und der am nächsten zu einem Fahrzeug ist, und sich die Straßenrandpunkte in jedem der Abdeckungssätze auf der Abdeckungskurve befinden, die dem Abdeckungssatz entspricht; und

Auswählen, aus einer Vielzahl von Abdeckungskurven, einer Abdeckungskurve mit der höchsten Punktzahl als ersten Straßenrand, wobei die Punktzahl positiv mit einem Absolutwert eines Abstoßungsabstands korreliert ist und positiv mit einer Menge von Inliern korreliert ist, wobei der Inlier ein Straßenrandpunkt ist, der sich in dem zweiten Satz befindet und zu dem ein Abstand von der Abdeckungskurve kleiner oder gleich einem voreingestellten Schwellenwert ist, der Abstoßungsabstand verwendet wird, um eine Summe von Abständen zwischen den Straßenrandpunkten in dem zweiten Satz und einer angepassten Kurve anzugeben, und Abstände zwischen den Straßenrandpunkten, die sich auf verschiedenen Seiten der Abdeckungskurve und der angepassten Kurve befinden, unterschiedlich sind, wobei einer positiv und der andere negativ ist.

5. Verfahren nach einem der Ansprüche 1 bis 4, wobei das Verfahren ferner Folgendes umfasst:
Einpassen der Straßenrandpunkte in dem zweiten Satz in ein rechtwinkliges Koordinatensystem, um den ersten Straßenrand zu erhalten, wobei eine horizontale Koordinatenachse des rechtwinkligen Koordinatensystems parallel zu einer geraden Verbindungslinie ist, zwei Endpunkte der geraden Verbindungslinie zwei Straßenrandpunkte sind, die in dem zweiten Satz sind und die dem Fahrzeug am nächsten bzw. am weitesten von diesem entfernt sind, und die Straßenerkennungsinformation vom Fahrzeug erfasst werden.

6. Verfahren nach einem der Ansprüche 1 bis 5, wobei die erste Richtung die Fahrrichtung des Fahrzeugs ist und die Straßenerkennungsinformationen vom Fahrzeug erfasst werden.

7. Vorrichtung (2000) zur Erkennung von Straßenrändern zum Identifizieren eines Straßenrands, wenn sich ein Fahrzeug an einer Anschlussstelle, einer Kreuzung oder dergleichen befindet, umfassend ein Erhaltungsmodul (2010) und ein Verarbeitungsmodul (2020), wobei

das Erhaltungsmodul (2010) dazu konfiguriert ist, Straßenerkennungsinformationen zu erhalten, wobei die Straßenerkennungsinformationen eine Vielzahl von Straßenrandpunkten umfassen, wobei ein Straßenrandpunkt ein Punkt an einem Bordstein ist;
das Verarbeitungsmodul (2020) dazu konfiguriert ist, die Vielzahl von Straßenrandpunkten zu clustern, um eine Vielzahl von Sätzen zu erhalten, wobei ein erster Satz in der Vielzahl von Sätzen mindestens eine Sprunggruppe umfasst und jede Sprunggruppe einen ersten Straßenrandpunkt und einen zweiten Straßenrandpunkt umfasst, wobei der erste Straßenrandpunkt und der zweite Straßenrandpunkt zu verschiedenen Straßenrändern gehören;
das Verarbeitungsmodul (2020) dazu konfiguriert ist, in einer ersten Richtung eine Vielzahl von Straßenrandpunkten in dem ersten Satz zu sortieren, wobei für jede Sprunggruppe der erste Straßenrandpunkt und der zweite Straßenrandpunkt in der ersten Richtung aneinander angrenzen und ein Abstand zwischen dem ersten Straßenrandpunkt und dem zweiten Straßenrandpunkt größer als oder gleich einem voreingestellten Abstand ist; und
das Verarbeitungsmodul (2020) dazu konfiguriert ist, den ersten Satz in einen zweiten Satz und einen dritten Satz basierend auf der mindestens einen Sprunggruppe zu segmentieren, wobei der zweite Satz einem ersten Straßenrand entspricht und der dritte Satz einem zweiten Straßenrand entspricht.

8. Vorrichtung (2000) nach Anspruch 7, wobei eine Menge der mindestens einen Sprunggruppe mehr als eins beträgt, und

das Verarbeitungsmodul (2020) dazu konfiguriert ist, eine Segmentierungslinie zu bestimmen, wobei sich für jede Sprunggruppe der erste Straßenrandpunkt und der zweite Straßenrandpunkt getrennt auf zwei Seiten der Segmentierungslinie befinden; und
das Verarbeitungsmodul (2020) dazu konfiguriert ist, den ersten Satz in den zweiten Satz und den dritten Satz basierend auf der Segmentierungslinie zu segmentieren, wobei ein Straßenrandpunkt in dem zweiten Satz und ein Straßenrandpunkt in dem dritten Satz Straßenrandpunkte in dem ersten Satz sind, die sich auf verschiedenen Seiten der Segmentierungslinie befinden.

9. Vorrichtung (2000) nach Anspruch 8, wobei

das Verarbeitungsmodul (2020) dazu konfiguriert ist, eine Vielzahl von Segmentierungspunkten zu bestimmen, wobei die Vielzahl von Segmentierungspunkten in einer Eins-zu-Eins-Entsprechung mit der Vielzahl von Sprunggruppen steht und sich jeder Segmentierungspunkt an einem Mittelpunkt zwischen dem ersten Straßenrandpunkt und dem zweiten Straßenrandpunkt befindet, die sich in der dem Segmentierungspunkt entsprechenden Sprunggruppe befinden; und

das Verarbeitungsmodul (2020) dazu konfiguriert ist, die Segmentierungslinie basierend auf der Vielzahl von Segmentierungspunkten zu bestimmen.

10. Vorrichtung (2000) nach einem der Ansprüche 7 bis 9, wobei

das Verarbeitungsmodul (2020) dazu konfiguriert ist, eine Abdeckungskurve zu bestimmen, die jedem Abdeckungssatz in einer Vielzahl von Abdeckungssätzen entspricht, wobei jeder der Abdeckungssätze eine Vielzahl von Straßenrandpunkten in dem zweiten Satz umfasst, jeder der Abdeckungssätze einen dritten Straßenrandpunkt umfasst, der sich in dem zweiten Satz befindet und der am nächsten zu einem Fahrzeug ist, und sich die Straßenrandpunkte in jedem der Abdeckungssätze auf der Abdeckungskurve befinden, die dem Abdeckungssatz entspricht; und

das Verarbeitungsmodul (2020) dazu konfiguriert ist, aus einer Vielzahl von Abdeckungskurven eine Abdeckungskurve mit der höchsten Punktzahl als ersten Straßenrand auszuwählen, wobei die Punktzahl positiv mit einem Absolutwert eines Abstoßungsabstands korreliert ist und positiv mit einer Menge von Inliern korreliert ist, wobei der Inlier ein Straßenrandpunkt ist, der sich in dem zweiten Satz befindet und zu dem ein Abstand von der Abdeckungskurve kleiner oder gleich einem voreingestellten Schwellenwert ist, der Abstoßungsabstand verwendet wird, um eine Summe von Abständen zwischen den Straßenrandpunkten in dem zweiten Satz und einer angepassten Kurve anzugeben, und Abstände zwischen den Straßenrandpunkten, die sich auf verschiedenen Seiten der Abdeckungskurve und der angepassten Kurve befinden, unterschiedlich sind, wobei einer positiv und der andere negativ ist.

11. Vorrichtung (2000) nach einem der Ansprüche 7 bis 10, wobei das Verarbeitungsmodul (2020) dazu konfiguriert ist, die Straßenrandpunkte in dem zweiten Satz in ein rechtwinkliges Koordinatensystem einzupassen, um den ersten Straßenrand zu erhalten, wobei eine horizontale Koordinatenachse des rechtwinkligen Koordinatensystems parallel zu einer geraden Verbindungslinie ist, zwei Endpunkte der geraden Verbindungslinie zwei Straßenrandpunkte sind, die in dem zweiten Satz sind und die dem Fahrzeug am nächsten bzw. am weitesten von diesem entfernt sind, und die Straßenerkennungsinfor

mation vom Fahrzeug erfasst werden.

12. Vorrichtung (2000) nach einem der Ansprüche 7 bis 11, wobei die erste Richtung die Fahrrichtung des Fahrzeugs ist und die Straßenerkennungsinformationen vom Fahrzeug erfasst werden.

13. Vorrichtung (3000) zur Erkennung von Straßenrändern, die mindestens einen Speicher (3010) und mindestens einen Prozessor (3020) umfasst, wobei der mindestens eine Speicher dazu konfiguriert ist, ein Programm zu speichern, und der mindestens eine Prozessor dazu konfiguriert ist, das Programm laufen zu lassen, um das Verfahren nach einem der Ansprüche 1 bis 6 umzusetzen.

14. Chip, umfassend mindestens einen Prozessor und eine Schnittstellenschaltung, wobei die Schnittstellenschaltung dazu konfiguriert ist, Programmanweisungen oder Daten für den mindestens einen Prozessor bereitzustellen, und der mindestens eine Prozessor dazu konfiguriert ist, die Programmanweisungen auszuführen, um das Verfahren nach einem der Ansprüche 1 bis 6 umzusetzen.

15. Computerlesbares Speichermedium, wobei das computerlesbare Speichermedium Programmcode speichert, der durch ein Gerät auszuführen ist, und, wenn der Programmcode von dem Gerät ausgeführt wird, das Verfahren nach einem der Ansprüche 1 bis 6 umgesetzt wird.

**Revendications**

1. Procédé de reconnaissance de bordure de route mis en œuvre par ordinateur, destiné à identifier une bordure de route lorsqu'un véhicule se trouve à une bretelle d'accès, une intersection ou un endroit similaire, comprenant :

l'obtention (S310) d'informations de reconnaissance de route, dans lequel les informations de reconnaissance de route comprennent une pluralité de points de bordure de route, dans lequel un point de bordure de route est un point sur un trottoir ;

le regroupement (S320) de la pluralité de points de bordure de route pour obtenir une pluralité d'ensembles, dans lequel un premier ensemble dans la pluralité d'ensembles comprend au moins un groupe de sauts, et chaque groupe de sauts comprend un premier point de bordure de route et un deuxième point de bordure de route, dans lequel le premier point de bordure de route et le deuxième point de bordure de route appartiennent à des bordures de route différentes ;

le tri (S330), dans une première direction, d'une pluralité de points de bordure de route dans le premier ensemble, dans lequel pour chaque groupe de sauts, le premier point de bordure de route et le deuxième point de bordure de route sont adjacents l'un à l'autre dans la première direction, et une distance entre le premier point de bordure de route et le deuxième point de bordure de route est supérieure ou égale à une distance prédéfinie ; et

la segmentation (S340) du premier ensemble en un deuxième ensemble et un troisième ensemble sur la base de l'au moins un groupe de sauts, dans lequel le deuxième ensemble correspond à une première bordure de route et le troisième ensemble correspond à une deuxième bordure de route.

2. Procédé selon la revendication 1, dans lequel la quantité de l'au moins un groupe de sauts est supérieure à un, et

la segmentation du premier ensemble en un deuxième ensemble et un troisième ensemble sur la base de l'au moins un groupe de sauts comprend :

la détermination d'une ligne de segmentation, dans lequel, pour chaque groupe de sauts, le premier point de bordure de route et le deuxième point de bordure de route sont situés séparément sur deux côtés de la ligne de segmentation ; et

la segmentation du premier ensemble en deuxième ensemble et troisième ensemble sur la base de la ligne de segmentation, dans lequel un point de bordure de route dans le deuxième ensemble et un point de bordure de route dans le troisième ensemble sont des points de bordure de route dans le premier ensemble qui sont situés sur des côtés différents de la ligne de segmentation.

3. Procédé selon la revendication 2, dans lequel la détermination d'une ligne de segmentation comprend :

la détermination d'une pluralité de points de segmentation, dans lequel la pluralité de points de segmentation sont en correspondance biunivoque avec la pluralité de groupes de sauts, et chaque point de segmentation est situé à mi-chemin entre le premier point de bordure de route et le deuxième point de bordure de route qui se trouvent dans le groupe de sauts correspondant au point de segmentation ; et

la détermination de la ligne de segmentation sur la base de la pluralité de points de segmentation.

4. Procédé selon l'une quelconque des revendications 1 à 3, dans lequel le procédé comprend également :

la détermination d'une courbe de couverture correspondant à chaque ensemble de couverture dans une pluralité d'ensembles de couverture, dans lequel chacun des ensembles de couverture comprend une pluralité de points de bordure de route dans le deuxième ensemble, chacun des ensembles de couverture comprend un troisième point de bordure de route qui se trouve dans le deuxième ensemble et qui est le plus proche d'un véhicule, et les points de bordure de route dans chacun des ensembles de couverture sont situés sur la courbe de couverture correspondant à l'ensemble de couverture ; et

la sélection, à partir d'une pluralité de courbes de couverture, d'une courbe de couverture avec le score le plus élevé pour qu'elle soit la première bordure de route, dans lequel le score est corrélé positivement avec une valeur absolue d'une distance de répulsion et est corrélé positivement avec une quantité de points internes, dans lequel le point interne est un point de bordure de route qui se trouve dans le deuxième ensemble et dont une distance par rapport à la courbe de couverture est inférieure ou égale à un seuil prédéfini, la distance de répulsion est utilisée pour indiquer une somme de distances entre les points de bordure de route dans le deuxième ensemble et une courbe ajustée, et les distances entre les points de bordure de route situés sur des côtés différents de la courbe de couverture et de la courbe ajustée sont différentes, dans lequel l'une est positive, et l'autre est négative.

5. Procédé selon l'une quelconque des revendications 1 à 4, dans lequel le procédé comprend également : l'ajustement des points de bordure de route dans le deuxième ensemble dans un système de coordonnées rectangulaires, pour obtenir la première bordure de route, dans lequel un axe de coordonnées horizontal du système de coordonnées rectangulaires est parallèle à une ligne de connexion droite, deux extrémités de la ligne de connexion droite sont deux points de bordure de route qui se trouvent dans le deuxième ensemble et qui sont respectivement les plus proches et les plus éloignés du véhicule, et les informations de reconnaissance de route sont acquises par le véhicule.

6. Procédé selon l'une quelconque des revendications 1 à 5, dans lequel la première direction est une direction de conduite du véhicule et les informations de reconnaissance de route sont acquises par le véhicule.

**7.** Appareil de reconnaissance de bordure de route (2000), destiné à identifier une bordure de route lorsqu'un véhicule se trouve à une bretelle d'accès, une intersection ou un endroit similaire, comprenant un module d'obtention (2010) et un module de traitement (2020), dans lequel

le module d'obtention (2010) est configuré pour obtenir des informations de reconnaissance de route, dans lequel les informations de reconnaissance de route comprennent une pluralité de points de bordure de route, dans lequel un point de bordure de route est un point sur un trottoir ;
le module de traitement (2020) est configuré pour regrouper la pluralité de points de bordure de route pour obtenir une pluralité d'ensembles, dans lequel un premier ensemble dans la pluralité d'ensembles comprend au moins un groupe de sauts, et chaque groupe de sauts comprend un premier point de bordure de route et un deuxième point de bordure de route, dans lequel le premier point de bordure de route et le deuxième point de bordure de route appartiennent à des bordures de route différentes ;
le module de traitement (2020) est également configuré pour trier, dans une première direction, une pluralité de points de bordure de route dans le premier ensemble, dans lequel pour chaque groupe de sauts, le premier point de bordure de route et le deuxième point de bordure de route sont adjacents l'un à l'autre dans la première direction, et une distance entre le premier point de bordure de route et le deuxième point de bordure de route est supérieure ou égale à une distance prédéfinie ; et le module de traitement (2020) est configuré pour segmenter le premier ensemble en un deuxième ensemble et un troisième ensemble sur la base de l'au moins un groupe de sauts, dans lequel le deuxième ensemble correspond à une première bordure de route et le troisième ensemble correspond à une deuxième bordure de route.

**8.** Appareil (2000) selon la revendication 7, dans lequel une quantité de l'au moins un groupe de sauts est supérieure à un, et

le module de traitement (2020) est configuré pour déterminer une ligne de segmentation, dans lequel, pour chaque groupe de sauts, le premier point de bordure de route et le deuxième point de bordure de route sont situés séparément sur deux côtés de la ligne de segmentation ; et
le module de traitement (2020) est configuré pour segmenter le premier ensemble en deuxième ensemble et troisième ensemble sur la base de la ligne de segmentation, dans lequel un point de bordure de route dans le deuxième ensemble et un point de bordure de route dans le troisième ensemble sont des points de bordure de route dans le premier ensemble qui sont situés sur des côtés différents de la ligne de segmentation.

**9.** Appareil (2000) selon la revendication 8, dans lequel

le module de traitement (2020) est configuré pour déterminer une pluralité de points de segmentation, dans lequel la pluralité de points de segmentation sont en correspondance biunivoque avec la pluralité de groupes de sauts, et chaque point de segmentation est situé à mi-chemin entre le premier point de bordure de route et le deuxième point de bordure de route qui se trouvent dans le groupe de sauts correspondant au point de segmentation ; et
le module de traitement (2020) est configuré pour déterminer la ligne de segmentation sur la base de la pluralité de points de segmentation.

**10.** Appareil (2000) selon l'une quelconque des revendications 7 à 9, dans lequel

le module de traitement (2020) est configuré pour déterminer une courbe de couverture correspondant à chaque ensemble de couverture dans une pluralité d'ensembles de couverture, dans lequel chacun des ensembles de couverture comprend une pluralité de points de bordure de route dans le deuxième ensemble, chacun des ensembles de couverture comprend un troisième point de bordure de route qui se trouve dans le deuxième ensemble et qui est le plus proche d'un véhicule, et les points de bordure de route dans chacun des ensembles de couverture sont situés sur la courbe de couverture correspondant à l'ensemble de couverture ; et
le module de traitement (2020) est configuré pour sélectionner, à partir d'une pluralité de courbes de couverture, une courbe de couverture avec le score le plus élevé pour qu'elle soit la première bordure de route, dans lequel le score est corrélé positivement avec une valeur absolue d'une distance de répulsion et est corrélé positivement avec une quantité de points internes, dans lequel le point interne est un point de bordure de route qui se trouve dans le deuxième ensemble et dont une distance par rapport à la courbe de couverture est inférieure ou égale à un seuil prédéfini, la distance de répulsion est utilisée pour indiquer une somme de distances entre les points de bordure de route dans le deuxième ensemble et une courbe ajustée, et les distances entre les points de bordure de route situés sur des côtés différents de la courbe de couverture et de la courbe ajustée sont différentes, dans lequel l'une est positive, et l'autre est négative.

**11.** Appareil (2000) selon l'une quelconque des revendications 7 à 10, dans lequel
le module de traitement (2020) est configuré pour ajuster des points de bordure de route dans le deuxième ensemble dans un système de coordonnées rectangulaires, pour obtenir la première bordure de route, dans lequel un axe de coordonnées horizontal du système de coordonnées rectangulaires est parallèle à une ligne de connexion droite, deux extrémités de la ligne de connexion droite sont deux points de bordure de route qui se trouvent dans le deuxième ensemble et qui sont respectivement les plus proches et les plus éloignés du véhicule, et les informations de reconnaissance de route sont acquises par le véhicule.

**12.** Appareil (2000) selon l'une quelconque des revendications 7 à 11, dans lequel la première direction est une direction de conduite du véhicule et les informations de reconnaissance de route sont acquises par le véhicule.

**13.** Appareil de reconnaissance de bordure de route (3000), comprenant au moins une mémoire (3010) et au moins un processeur (3020), dans lequel l'au moins une mémoire est configurée pour stocker un programme et l'au moins un processeur est configuré pour exécuter le programme, pour mettre en œuvre le procédé selon l'une quelconque des revendications 1 à 6.

**14.** Puce comprenant au moins un processeur et un circuit d'interface, dans laquelle le circuit d'interface est configuré pour fournir des instructions de programme ou des données pour l'au moins un processeur, et l'au moins un processeur est configuré pour exécuter les instructions de programme pour mettre en œuvre le procédé selon l'une quelconque des revendications 1 à 6.

**15.** Support de stockage lisible par ordinateur, dans lequel le support lisible par ordinateur stocke un code de programme à exécuter par un dispositif, et lorsque le code de programme est exécuté par le dispositif, le procédé selon l'une quelconque des revendications 1 à 6 est mis en œuvre.

FIG. 1

| Obtain road recognition information, where the road recognition information includes a plurality of road boundary points | S310 |
|---|---|

| Cluster the plurality of road boundary points to obtain a plurality of sets, where a first set in the plurality of sets includes at least one jump group, and each jump group includes a first road boundary point and a second road boundary point | S320 |
|---|---|

| Sort, in a first direction, a plurality of road boundary points in the first set, where for each jump group, the first road boundary point and the second road boundary point are adjacent to each other in the first direction, and a distance between the first road boundary point and the second road boundary point is greater than or equal to a preset distance | S330 |
|---|---|

| Segment the first set into a second set and a third set based on the at least one jump group, where the second set corresponds to a first road boundary, and the third set corresponds to a second road boundary | S340 |
|---|---|

FIG. 2

Point set 1

Point set 2

Point set 3

Vehicle location

FIG. 3

FIG. 4

FIG. 5

FIG. 6

FIG. 7

FIG. 8

FIG. 9

3000

Memory

3010

Processor

3020

FIG. 10

**EP 4 290 276 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110781827 A